# EUROPEAN PATENT APPLICATION

(11) **EP 3 882 594 A1**
(43) Date of publication of application: **22.09.2021**
(21) Application number: 19885161.0
(22) Date of filing: 08.11.2019
(51) Int. Cl.: G01K 11/32

(54) **PLANAR OPTICAL WAVEGUIDE DEVICE, AND TEMPERATURE MEASUREMENT SYSTEM**

(30) Priority: 14.11.2018 CN 201811350200
(71) Applicant: Shenzhen Yixun Technology Co., Ltd., Shenzhen, Guangdong 518133 (CN)
(72) Inventor: XIE, Jianhao, Shenzhen, Guangdong 518133 (CN); LIU, Dongchang, Shenzhen, Guangdong 518133 (CN); ZHANG, Jianping, Shenzhen, Guangdong 518133 (CN)
(74) Representative: Serjeants LLP
(86) International application number: PCT/CN2019/116731
(87) International publication number: WO 2020/098577

(57) **Abstract**

The application provides a planar lightwave circuit device and a temperature measurement system, including a probe light source, a photoelectric detector, a planar lightwave circuit device and a measuring optical fiber; the planar lightwave circuit device comprises a substrate, wherein N temperature measurement channels are arranged in the substrate; each temperature measurement channel comprises an incident light path, a reflected light path and an outgoing light path; in the N temperature measurement channels arranged side by side, the incident light path of one temperature measurement channel is provided with an intersection point with the reflected light path of at least one other temperature measurement channel; the probe light source is connected to N incident light paths, the photoelectric detector is connected to N reflected light paths, the measuring optical fiber is connected to N outgoing light paths; the measuring optical fiber is provided with an FBG sensor. When performing multi-channel temperature measurement, in the N temperature measurement channels arranged side by side, an intersection point is set between the incident light path of one temperature measurement channel and the reflected light path of at least one other temperature measurement channel to realize the transmission, measurement and demodulation of optical signals.

## Description

### CROSS-REFERENCE TO RELATED APPLICATION

The present application declares priority of the Chinese patent application with number 201811350200.4, filed on November 14, 2018, entitled "PLANAR LIGHTWAVE CIRCUIT DEVICE AND TEMPERATURE MEASUREMENT SYSTEM". Entire content of the Chinese patent application is incorporated in the present application by reference.

### TECHNICAL FIELD

The present application relates to a field of optical fiber sensing technology, in particular to a planar lightwave circuit device and a temperature measurement system.

### BACKGROUND

A general temperature measurement system usually detects the temperature of an object with the help of devices, such as temperature sensors and infrared measuring instruments. More advanced, it can also measure temperature through optical fiber temperature measurement technology. An FBG (fiber Bragg grating) sensor is a common device in the optical fiber temperature measurement technology. The FBG sensor is essentially different from the sensor based on electricity. The FBG sensor uses light as the carrier of sensitive information and optical fiber as the medium to transmit the sensitive information, and has the advantages of strong anti-electromagnetic interference ability and good anti-radiation performance. The FBG sensor is especially suitable for harsh environments, such as flammable, explosive, strictly restricted space and strong electromagnetic interference. New energy vehicle battery temperature measurement is a good example. Due to the limitation of the working environment of the battery pack of new energy vehicles, the traditional temperature sensor and infrared measuring instrument can not be applied to the battery temperature measurement of the new energy vehicles. Therefore, the FBG sensor is a better solution for the battery temperature measurement of the new energy vehicles.

When there are many temperature measurement points, a plurality of temperature measurement channels need to be set for temperature measurement, and there are inevitably cross points between the optical paths of the plurality of the temperature measurement channels. In the prior art, generally there are many transmission fibers coupled between the temperature measurement system and the object to be measured, and the optical paths of different temperature measurement channels can be crossed by the transmission fibers. However, coupling transmission fibers between the temperature measurement system and the object to be measured has the following problems: on the one hand, coupling a large number of transmission fibers takes time and labor, increasing production costs; on the other hand, a large number of transmission fibers make the structure of the temperature measurement system very complex, which is inconvenient for subsequent maintenance.

### SUMMARY

In order to overcome the shortcomings of the above prior art, the present application provides a planar lightwave circuit device and a temperature measurement system. In the process of temperature measurement using the FBG sensor, the planar lightwave circuit device replaces the transmission optical fiber in the prior art, which can simplify the structure of the equipment, reduce the production cost and maintenance cost of the equipment, and facilitate subsequent maintenance.

The technical solution for solving the above technical problem is as follows: a planar lightwave circuit device, comprising a substrate, wherein N temperature measurement channels are arranged in the substrate side by side; wherein N is an integer greater than 1;
each temperature measurement channel comprises an incident light path, a reflected light path and an outgoing light path; in the same temperature measurement channel, the incident light path, the reflected light path and the outgoing light path are connected through a common node; and
in the N temperature measurement channels arranged side by side, the incident light path of one temperature measurement channel is provided with an intersection point with the reflected light path of at least one other temperature measurement channel.

Compared with the prior art, the beneficial effects of the technical solution are that: the probe light enters the temperature measurement channel from one end of the incident light path, reaches the intersection point through the other end of the incident light path, and then enters the outgoing light path; the probe light entering the outgoing light path will reflect optical signals carrying the temperature information when passing through the FBG sensor, the optical signals enter the reflected light path after being transmitted back to the intersection point, and enters the photoelectric detector through the reflected light path for demodulation. When performing multi-channel temperature measurement, in the planar lightwave circuit device of the present technical solution, the intersection between different optical paths is not realized by transmitting optical fibers as in the prior art, but in N temperature measurement channels arranged side by side, an intersection point is set between the incident light path of one temperature measurement channel and the reflected light path of at least one other temperature measurement channel to realize the transmission, measurement and demodulation of the optical signals.

The technical solution for solving the above technical problem is as follows: a temperature measurement system, including a probe light source, a photoelectric detector, a planar lightwave circuit device and a measuring optical fiber;
the planar lightwave circuit device includes a substrate, wherein N temperature measurement channels are arranged in the substrate side by side; wherein N is an integer greater than 1;
each temperature measurement channel comprises an incident light path, a reflected light path and an outgoing light path; in the same temperature measurement channel, the incident light path, the reflected light path and the outgoing light path are connected through a common node; and
in the N temperature measurement channels arranged side by side, the incident light path of one temperature measurement channel is provided with an intersection point with the reflected light path of at least one other temperature measurement channel;
the probe light source is connected to the ends of N incident light paths away from the common node, the photoelectric detector is connected to ends of N reflected light paths away from the common node, the measuring optical fiber is connected to ends of N outgoing light paths away from the common node;
the measuring optical fiber is provided with an FBG sensor.

Compared with the prior art, the beneficial effects of the technical solution are that: the probe light emitted by the probe light source enters the temperature measurement channel from one end of the incident light path, reaches the intersection point through the other end of the incident light path, and then enters the outgoing light path; the probe light entering the outgoing light path will reflect optical signals carrying the temperature information when passing through the FBG sensor, the optical signals enter the reflected light path after being transmitted back to the intersection point, and enters the photoelectric detector through the reflected light path for demodulation. When performing multi-channel temperature measurement, in the present technical solution, the intersections between different optical paths are not realized by transmitting optical fibers as in the prior art, but in N temperature measurement channels arranged side by side, an intersection point is set between the incident light path of one temperature measurement channel and the reflected light path of at least one other temperature measurement channel to realize the transmission, measurement and demodulation of the optical signals.

### BRIEF DESCRIPTION OF THE DRAWINGS

FIG. 1 shows a schematic diagram of a temperature measurement channel in a planar lightwave circuit device of the present application;
FIG. 2 shows a schematic diagram of an embodiment of the planar lightwave circuit device of the present application;
FIG. 3 shows a schematic diagram of a inclined platform of the present application;
FIG. 4 shows a schematic diagram of another embodiment of the planar lightwave circuit device of the present application;
FIG. 5 shows a schematic diagram of a first embodiment of a temperature measurement system of the present application;
FIG. 6 shows a schematic diagram of a second embodiment of the temperature measurement system of the present application;
FIG. 7 shows a schematic diagram of another embodiment of the planar lightwave circuit device of the present application;
FIG. 8 shows a schematic diagram of another embodiment of the planar lightwave circuit device of the present application.

In the figures, the list of parts represented by each label is as follows:
1. Probe light source, 2. Photoelectric detector, 3. Planar lightwave circuit device, 4. Measuring optical fiber, 5. Substrate;
31. Temperature measurement channel, 32. Inclined platform, 33. Optical splitting unit, 34. First interface, 35. Second interface, 36. Third interface;
311. Incident light path, 312. Reflected light path, 313. Outgoing light path, 314. First temperature measurement channel, 315. Second temperature measurement channel, 316. Third temperature measurement channel, 317. Fourth temperature measurement channel;
331. Optical splitting input optical path, 332. Optical splitting output optical path.

### DETAILED DESCRIPTION OF ILLUSTRATIVE EMBODIMENTS

The principles and features of the present application are described below in combination with the accompanying drawings. The examples cited are only for explaining the present application and are not for limiting the scope of the present application.

Planar Lightwave Circuit (PLC). Planar lightwave circuit devices in the prior art are mostly used for communication light splitting. A planar lightwave circuit device generally includes a substrate, on which an optical path is carved by lithography, etching, development and other techniques, and an optical signal propagates forward on the optical path through reflection. Therefore, the working principle of the planar lightwave circuit device is to propagate the optical signal in a specific direction through the optical path set on the substrate. Specifically, the material of the substrate can be silicon dioxide, lithium niobate, and III-V group semiconductor compounds.

A communication system has relatively high requirements for crosstalk. In the planar lightwave circuit device used for communication light splitting, there can be no intersection point between different communication channels. Therefore, when optical paths of two communication channels need to cross, the optical paths of two communication channels can only be crossed by means of optical fiber, and the optical paths of two communication channels can not be crossed in the planar lightwave circuit device.

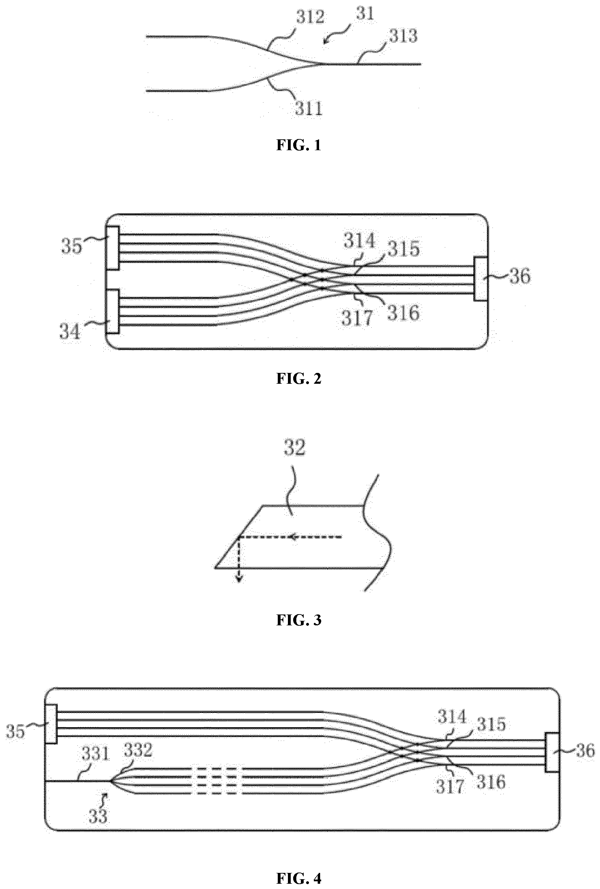

As shown in FIG. 1 and FIG. 2, in a first embodiment, the planar lightwave circuit device includes a substrate, wherein N temperature measurement channels 31 are arranged in the substrate side by side; wherein N is an integer greater than 1. In the present application, at least two temperature measurement channels 31 are set. If only one temperature measurement channel 31 is set in the planar lightwave circuit device, there will be no cross between the optical paths of different temperature measurement channels 31.

In the N temperature measurement channels 31 arranged side by side, each temperature measurement channel 31 includes an incident light path 311, a reflected light path 312 and an outgoing light path 313. In the same temperature measurement channel 31, the incident light path 311, the reflected light path 312 and the outgoing light path 313 are connected through a common node; in the N temperature measurement channels 31 arranged side by side, the incident light path 311 of one temperature measurement channel is provided with an intersection point with the reflected light path 312 of at least one other temperature measurement channel.

The working principle of the above planar lightwave circuit device is as follows: both the incident optical path 311, the reflected light path 312 and the outgoing optical path 313 is connected with the temperature measurement system through one end far from the intersection point, and a probe light propagates forward in the incident optical path 311 after entering the temperature measurement channel 31, and enters the outgoing optical path 313 through the intersection point; the temperature measurement system connects with the outgoing optical path 313 through the FBG sensor, and the probe light enters the outgoing optical path 313 from the intersection point. When the probe light meets the FBG sensor, the FBG sensor will reflect optical information with the temperature information, and the optical information reflected enters the reflected light path 312 through the intersection point, and then is sent to the temperature measurement system through the reflected light path 312; the temperature measurement system demodulates the optical information with the temperature information to obtain a temperature of a point to be measured and achieve the purpose of temperature measurement.

In this way, even if a plurality of temperature measurement channels are set in parallel in a planar lightwave circuit device, the optical path can be arranged by setting intersection points between the incident optical path of one temperature measurement channel and the reflected light paths of other temperature measurement channels, and the docking between the temperature measurement system and different temperature measurement channels can be realized without using the transmission optical fiber of the prior art.

It should be noted that, in the planar lightwave circuit device for communication light splitting in the prior art, if there are intersection points between the optical paths of different communication channels, crosstalk will occur. Since the communication system is more sensitive, such crosstalk will have a great impact on the communication. Therefore, in the planar lightwave circuit device of the prior art, there is no intersection point between the optical paths of different channels.

The invention of the present application lies in the fact that in the planar lightwave circuit device used for temperature measurement, in the N temperature measurement channels arranged side by side, an intersection point is set between the incident light path of one temperature measurement channel and the reflected light path of at least one other temperature measurement channel, so that a temperature measurement function of each temperature measurement channel is not affected, and there is no need to connect the temperature measurement system and the object to be measured through the transmission optical fiber, so there is no failure caused by the damage of the optical fiber, which can reduce the maintenance cost and facilitate subsequent maintenance; at the same time, when the temperature measurement system is assembled on the object to be measured, the coupling can be completed directly through the planar lightwave circuit device in the present technical solution, and such a planar lightwave circuit device is convenient for large-scale production and does not need to be equipped with the transmission optical fiber, which can reduce the production cost of equipment.

The temperature measurement system is not sensitive to the crosstalk when using the planar lightwave circuit devices combined with the FBG sensor to measure temperatures. For example, when the probe light propagates from the incident light path to the intersection point, most of the probe light enters the outgoing light path, but a small part of the probe light enters the reflected light path, and the crosstalk occurs at this time. But the temperature measurement system does not require a high accuracy, the crosstalk does not affect the normal work of the temperature measurement system. Therefore, the planar lightwave circuit device with intersection points between the optical paths of different temperature measurement channels can be used for temperature measurement.

As shown in FIG. 2, in the N temperature measurement channels arranged side by side, ends of N incident light paths away from the common node converge to form a first interface 34, and ends of N reflected light paths away from the common node converge to form a second interface 35, and ends of N outgoing light paths away from the common node converge to form a third interface 36.

Only interfaces matching the first interface 34, the second interface 35 and the third interface 36 need to be provided on each component of the temperature measurement system, the temperature measurement system and the planar lightwave circuit device can be coupled by docking with the first interface 34, the second interface 35 and the third interface 36 respectively through the interfaces on the temperature measurement system to achieve modular docking.

Preferably, the first interface 34 and the second interface 35 are jointly arranged on one side of the substrate, while the third interface 36 is arranged on the other side of the substrate. As the first interface 34 and the second interface 35 need to be connected with the temperature measurement system, and the third interface 36 needs to connect with the object to be measured through the measurement optical fiber, such a setting makes the structure of the whole system more reasonable.

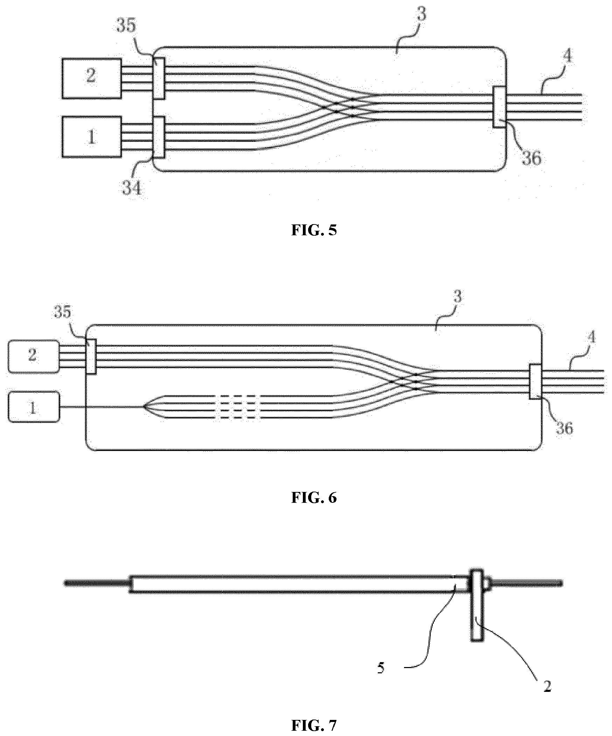

As shown in FIG. 7, in an embodiment, the planar lightwave circuit device is also integrated with a photoelectric detector 2 for converting an optical signal into an electrical signal. The photoelectric detector 2 is vertically arranged on a side close to the second interface 34 of the substrate 5, namely, the photoelectric detector 2 is perpendicular to the substrate 5, and the photoelectric detector 2 is connected to the N reflected light paths through the second interface 34. Such a setting enables the optical signal output through the reflected light paths can directly enter into an input end of the photoelectric detector 2, instead of connecting with the reflected light paths through the optical fiber line first, and then connecting with the input end of the photoelectric detector 2 through the optical fiber line, which reduces the use of connecting with the optical fiber, simplifies the connection of optical circuit and improves the maintainability of the system, and then costs can be reduced.

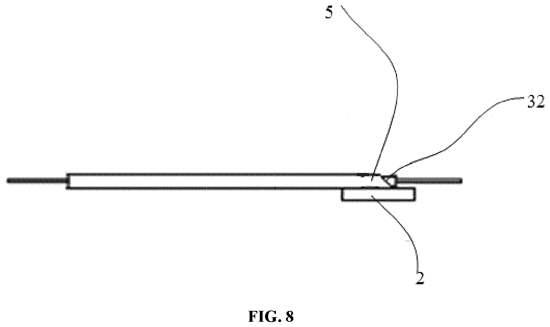

As shown in FIG. 3 and FIG. 8, the substrate is a sheet structure, an inclined platform 32 with an inclination angle is arranged on one side of the substrate, and the second interface is arranged on the inclined platform 32. Preferably, the inclination angle of the inclined platform 32 is 40°- 50°, the advantages of this arrangement are simple process, high coupling efficiency, and the optical signals output from the reflected light paths can be emitted in a vertical horizontal plane after being reflected by the inclined platform. In other embodiments of the present invention, the inclination angle of the inclined platform 32 can also be 7°, 8° 45°, or other angles, and the specific angle is determined according to the angle between the reflected light path in the substrate and the horizontal plane. Generally, it is appropriate that the optical signal output by the reflected light path can be emitted in the vertical horizontal plane after being reflected by the inclined platform, which is not further limited in this application.

What comes out from the reflected light path is the optical information with temperature information. After the optical information with the temperature information is obtained by the temperature measurement system from the reflected light path, the temperature of the object to be measured is obtained by demodulating the optical information with the temperature information. In order to realize the optical transmission between the two, the temperature measurement system must be coupled with each reflected light path. Take the photoelectric detector 2 as an example to illustrate the working principle of the inclined platform 32: the inclined platform 32 is set on the substrate, and the photoelectric detector 2 and the substrate are relatively fixed, and the optical information carrying the temperature information enters the photoelectric detector after passing through the inclined platform 32. In this way, the photoelectric detector 2 can perform the next step of demodulation.

It should be noted that, in this embodiment, the photoelectric detector 2 is integrally arranged in the planar lightwave circuit device, and the photoelectric detector 2 is arranged on the side close to the second interface 34 of the substrate. Specifically, the photoelectric detector 2 is arranged at different positions close to the second interface 34 of the substrate according to the tilt direction and inclination angle of the inclined platform. For example, when the inclined platform tilts downward, the photoelectric detector 2 is horizontally arranged below the side close to the second interface 34 of the substrate; when the inclined platform tilts upward, the photoelectric detector 2 is horizontally arranged above the side close to the second interface 34 of the substrate; in addition, the photoelectric detector 2 can also be set above or below, left or right side of the side close to the second interface 34 of the substrate at a certain inclination angle, as long as the photoelectric detector 2 can be connected to the N reflected light paths through the second interface 34. Through this setting, the embodiment of the present invention enables the optical signal output through the reflected light paths can directly enter into an input end of the photoelectric detector 2, instead of connecting with the reflected light paths through the optical fiber line first, and then connecting with the input end of the photoelectric detector 2 through the optical fiber line, which reduces the use of connecting with the optical fiber, simplifies the connection of optical circuit and improves the maintainability of the system, and then costs can be reduced. In addition, the photoelectric detector 2 is set below or above the planar lightwave circuit device, and the photoelectric detector 2 is placed horizontally under or above the planar lightwave circuit device, rather than vertically set with the substrate, so as to solve the problem that the thickness of the planar lightwave circuit device is thicker due to the larger width of the photoelectric detector when it is set vertically, thereby, the thickness of the planar lightwave circuit devices can be reduced, and then the thin of the planar lightwave circuit devices can be realized.

As shown in FIG. 4, in a second embodiment, an optical splitting unit 33 is also arranged in the substrate. The optical splitting unit 33 comprises an optical splitting input optical path 331 and N optical splitting output optical paths 332, an output end of the optical splitting input optical path 331 is connected to input ends of the N optical splitting output optical paths 332 respectively, and output ends of the N optical splitting output optical paths 332 are connected to N incident optical paths one-by-one.

The function of the optical splitting unit 33 is to divide the probe light into uniform n parts. In order to achieve the purpose, an optical splitting unit can be composed of a plurality of one-to-two optical paths. For example, when the optical splitting unit includes a light splitting input optical path and four optical splitting output optical paths, in fact, the optical splitting unit is composed of three one-to-two optical paths, and the specific structure is that two output ends of the first one-to-two optical path are respectively connected with input ends of the second one-to-two optical path and the third one-to-two optical path, output ends of the second one-to-two optical path and the third one-to-two optical path form four outlets, thus one-to-four is realized. Of course, in addition to the optical splitting unit is composed of a plurality of one-to-two optical paths, the light splitting unit 33 can be composed of an optical splitting input optical path 331 and N optical splitting output optical paths 332, as shown in FIG. 4.

In general, due to a plurality of temperature measurement channels are set, the probe light needs to be connected to each incident optical path respectively through a splitter. In this way, an additional splitter is required. In order to connect the splitter with each incident optical path, a plurality of transmission optical fibers are also required.

In this regard, the solution provided in the present application is that a light splitting unit 33 is also provided in the substrate. The probe light enters the optical splitting input optical path 331, then is divided into a plurality of paths, and then is output through a plurality of optical splitting output optical paths 332, and enters into a plurality of incident light paths one by one. In this way, no additional splitter is required to further simplify the temperature measurement system.

It should be noted that the light splitting unit can connect with the probe light only through the optical splitting input optical path, therefore, in the second embodiment, there is no need to set the first interface.

The more the temperature measurement channels are, the more complex the system will be if the optical fiber is used for coupling; correspondingly, the more the temperature measurement channels, the more significant the beneficial effect of implementing the application. Specifically, the number of the temperature measurement channels may be 2, 3, 4, etc., or 12, 16, 18 or 24 temperature measurement channels can be set according to actual needs. That is, N is an integer greater than 1.

In both the first embodiment and the second embodiment, four temperature measurement channels are provided. As shown in FIG. 2 and FIG. 4, four temperature measurement channels are arranged side by side in the substrate, wherein the four temperature measurement channels 31 arranged side by side include a first temperature measurement channel 314, a second temperature measurement channel 315, a third temperature measurement channel 316 and a fourth temperature measurement channel 317.

The incident light path 311 in the first temperature measurement channel 314 has intersection points with the reflected light path 312 in the second temperature measurement channel 315, the reflected light path 312 in the third temperature measurement channel 316 and the reflected light path 312 in the fourth temperature measurement channel 317. The incident light path 311 in the second temperature measurement channel 315 has intersection points with the reflected light path 312 in the third temperature measurement channel 316 and the reflected light path 312 in the fourth temperature measurement channel 317. The incident light path 311 in the third temperature measurement channel 316 is provided with an intersection point with the reflected light path 312 in the fourth temperature measurement channel 317.

Therefore, in the first embodiment and the second embodiment, 6 intersection points are provided. If the optical fiber is used for docking, 12 optical fibers are needed, which makes the temperature measurement system very complex and inconvenient for subsequent maintenance.

The following is a detailed description of a temperature measurement system.

As shown in FIG. 1 and FIG. 5, in the first embodiment, the temperature measurement system includes a probe light source 1, a photoelectric detector 2, a planar lightwave circuit device 3 and a measuring optical fiber 4. The planar lightwave circuit device 3 includes a substrate, wherein N temperature measurement channels are arranged in the substrate side by side; Wherein N is an integer greater than 1. In the present application, at least two temperature measurement channels are set. If only one temperature measurement channel is set in the planar lightwave circuit device, there will be no cross between the optical paths of different temperature measurement channels.

Each temperature measurement channel 31 includes an incident light path 311, a reflected light path 312 and an outgoing light path 313; in the same temperature measurement channel 31, the incident light path 311, the reflected light path 312 and the outgoing light path 313 are connected through a common node. In the N temperature measurement channels 31 arranged side by side, the incident light path 311 of one temperature measurement channel is provided with an intersection point with the reflected light path 312 of at least one other temperature measurement channel.

The probe light source 1 is connected to ends of incident light paths 311 away from the common node, the photoelectric detector 2 is connected to ends of reflected light paths 312 away from the common node, the measuring optical fiber 4 is connected to ends of outgoing light paths 313 away from the common node; the measuring optical fiber 4 is provided with an FBG sensor.

The working principle of the above temperature measurement system is as follows: the probe light source emits probe light, and the detection light propagates along the measurement optical fiber; the FBG sensor is set in the measuring optical fiber. The FBG sensor presents different fiber Bragg grating structures due to the effect of thermal expansion and cold contraction at different temperatures. A refection occurs when the probe light propagates to the FBG sensor, and optical information with temperature information will be reflected. However, due to different fiber Bragg grating structures at different temperatures, the FBG sensor will reflect the optical information with different wavelengths. The photoelectric detector receives the reflected light information with the temperature information, and compares it with the probe light emitted from the probe light source, and the temperature value can be obtained according to the center wavelength offset to complete the temperature measurement.

Combining the planar lightwave circuit device to illustrate the working principle of the temperature measurement system: both the incident optical path, the reflected light path and the outgoing optical path are connected with the temperature measurement system through one end far from the intersection point, wherein, the incident optical path is connected to the probe light through the end far from the intersection point, the reflected light path is connected to a photoelectric detector through the end far from the intersection point, the outgoing optical path is connected to a measuring optical fiber through the end far from the intersection point; and a probe light propagates forward in the incident optical path after entering the temperature measurement channel, and enters the outgoing optical path through the intersection point; the FBG sensor in the measuring optical fiber connects with the outgoing optical path, and the probe light enters the outgoing optical path from the intersection point. When the probe light meets the FBG sensor, the FBG sensor will reflect optical information with the temperature information, and the optical information reflected enters the reflected light path through the intersection point, and then is sent to the photoelectric detector through the reflected light path; the temperature measurement system demodulates the optical information with the temperature information to obtain a temperature of a point to be measured and achieve the purpose of temperature measurement.

In this way, even if a plurality of temperature measurement channels are set in parallel in a planar lightwave circuit device, the optical path can be arranged by setting intersection points between the incident optical path of one temperature measurement channel and the reflected light paths of other temperature measurement channels, and the docking between the temperature measurement system and different temperature measurement channels can be realized without using the transmission optical fiber of the prior art.

It should be noted that, in the planar lightwave circuit device for communication light splitting in the prior art, if there are intersection points between the optical paths of different communication channels, crosstalk will occur. Since the communication system is more sensitive, such crosstalk will have a great impact on the communication. Therefore, in the planar lightwave circuit device of the prior art, there is no intersection point between the optical paths of different channels.

The invention of the present application lies in the fact that in the planar lightwave circuit device used for temperature measurement, in the N temperature measurement channels arranged side by side, an intersection point is set between the incident light path of one temperature measurement channel and the reflected light path of at least one other temperature measurement channel, so that a temperature measurement function of each temperature measurement channel is not affected, and there is no need to connect the temperature measurement system and the object to be measured through the transmission optical fiber, so there is no failure caused by the damage of the optical fiber, which can reduce the maintenance cost and facilitate subsequent maintenance; at the same time, when the measuring optical fiber is assembled on the object to be measured, the coupling can be completed directly through the planar lightwave circuit device in the present technical solution, and such a planar lightwave circuit device is convenient for large-scale production and does not need to be equipped with the transmission optical fiber, which can reduce the production cost of equipment.

The temperature measurement system is not sensitive to the crosstalk when using the planar lightwave circuit devices combined with the FBG sensor to measure temperatures. For example, when the probe light propagates from the probe light source to the intersection point through the incident light path, most of the probe light enters the outgoing light path, but a small part of the probe light enters the reflected light path, and the crosstalk occurs at this time. But the temperature measurement system does not require a high accuracy, the crosstalk does not affect the normal work of the temperature measurement system. Therefore, the planar lightwave circuit device with intersection points between the optical paths of different temperature measurement channels can be used for temperature measurement.

As shown in FIG. 5, in the N temperature measurement channels arranged side by side, ends of N incident light paths away from the common node converge to form a first interface 34, and ends of N reflected light paths away from the common node converge to form a second interface 35, and ends of N outgoing light paths away from the common node converge to form a third interface 36.

Only interfaces matching the first interface 34, the second interface 35 and the third interface 36 need to be respectively set on the probe light source, the photoelectric detector, and the measuring optical fiber, the temperature measurement system and the planar lightwave circuit device can be coupled by respectively docking with the first interface 34, the second interface 35 and the third interface 36 through the interfaces on the probe light source, the photoelectric detector, and the measuring optical fiber, to achieve modular docking.

Specifically, the probe light source is connected with the N incident light paths through the first interface 34. The photoelectric detector is integrated in the planar lightwave circuit device, and is vertically arranged on a side close to the second interface 34 of the substrate, namely, the photoelectric detector is perpendicular to the substrate, and the photoelectric detector is connected to the N reflected light paths through the second interface 34. Such a setting enables the optical signal output through the reflected light paths can directly enter into an input end of the photoelectric detector 2, instead of connecting with the reflected light paths through the optical fiber line first, and then connecting with the input end of the photoelectric detector 2 through the optical fiber line, which reduces the use of connecting with the optical fiber, simplifies the connection of optical circuit and improves the maintainability of the system, and then costs can be reduced.

Preferably, the first interface 34 and the second interface 35 are jointly arranged on one side of the substrate, while the third interface 36 is arranged on the other side of the substrate. As the first interface 34 and the second interface 35 need to be connected with the probe light source and photoelectric detector in the temperature measurement system, and the third interface needs to connect with the object to be measured through the measurement optical fiber, such a setting makes the structure of the whole system more reasonable.

Preferably, as shown in FIG. 3 and FIG. 8, the substrate is a sheet structure, an inclined platform 32 with an inclination angle is arranged on one side of the substrate, and the second interface is arranged on the inclined platform 32. Preferably, the inclination angle of the inclined platform 32 is 40°~ 50°, the advantages of this arrangement are simple process, high coupling efficiency, and the optical signals output from the reflected light paths can be emitted in a vertical horizontal plane after being reflected by the inclined platform. In other embodiments of the present invention, the inclination angle of the inclined platform 32 can also be 7°, 8° 45°, or other angles, and the specific angle is determined according to the angle between the reflected light path in the substrate and the horizontal plane. Generally, it is appropriate that the optical signal output by the reflected light path can be emitted in the vertical horizontal plane after being reflected by the inclined platform, which is not further limited in this application.

What comes out from the reflected light path is the optical information with temperature information. After the optical information with the temperature information is obtained by the photoelectric detector from the reflected light path, the temperature of the object to be measured is obtained by demodulating the optical information with the temperature information. In order to realize the optical transmission between the two, the photoelectric detector must be coupled with each reflected light path. The inclined platform is set on the substrate, and the photoelectric detector, after the photoelectric detector is pasted on the inclined platform, the optical information carrying the temperature information enters the photoelectric detector after passing through the inclined platform. In this way, the photoelectric detector can perform the next step of demodulation.

It should be noted that, in this embodiment, the photoelectric detector 2 is integrally arranged in the planar lightwave circuit device, and the photoelectric detector 2 is arranged on the side close to the second interface 34 of the substrate. Specifically, the photoelectric detector 2 is arranged at different positions close to the second interface 34 of the substrate according to the tilt direction and inclination angle of the inclined platform. For example, when the inclined platform tilts downward, the photoelectric detector 2 is horizontally arranged below the side close to the second interface 34 of the substrate; when the inclined platform tilts upward, the photoelectric detector 2 is horizontally arranged above the side close to the second interface 34 of the substrate; in addition, the photoelectric detector 2 can also be set above or below, left or right side of the side close to the second interface 34 of the substrate at a certain inclination angle, as long as the photoelectric detector 2 can be connected to the N reflected light paths through the second interface 34. Through this setting, the embodiment of the present invention enables the optical signal output through the reflected light paths can directly enter into an input end of the photoelectric detector 2, instead of connecting with the reflected light paths through the optical fiber line first, and then connecting with the input end of the photoelectric detector 2 through the optical fiber line, which saves the optical fiber, thereby reducing costs. In addition, the photoelectric detector 2 is set below or above the planar lightwave circuit device, and the photoelectric detector 2 is placed horizontally under or above the planar lightwave circuit device, rather than vertically set with the substrate, so as to solve the problem that the thickness of the planar lightwave circuit device is thicker due to the larger width of the photoelectric detector when it is set vertically, thereby, the thickness of the planar lightwave circuit devices can be reduced, and then the thin of the planar lightwave circuit devices can be realized.

As shown in FIG. 4 and FIG. 6, in a second embodiment, an optical splitting unit 33 is also arranged in the substrate. The optical splitting unit 33 comprises an optical splitting input optical path 331 and N optical splitting output optical paths 332, an output end of the optical splitting input optical path 331 is connected to input ends of the N optical splitting output optical paths 332 respectively, and output ends of the N optical splitting output optical paths 332 are connected to N incident optical paths one-by-one. The probe light source 1 is connected to the input end of the optical splitting input optical path 331, and a plurality of incident light paths in the planar lightwave circuit device 3 are respectively connected to a plurality of optical splitting output optical paths 332.

In general, due to a plurality of temperature measurement channels are set, the probe light needs to be connected to each incident optical path respectively through a splitter. In this way, an additional splitter is required. In order to connect the splitter with each incident optical path, a plurality of transmission optical fibers are also required.

In this regard, the solution provided in the present application is that a light splitting unit is also provided in the substrate. The probe light enters the optical splitting input optical path, then is divided into a plurality of paths, and then is output through a plurality of optical splitting output optical paths, and enters into a plurality of incident light paths one by one. In this way, no additional splitter is required to further simplify the temperature measurement system.

It should be noted that the light splitting unit can connect with the probe light only through the optical splitting input optical path, therefore, in the second embodiment, there is no need to set the first interface.

The more the temperature measurement channels are, the more complex the system will be if the optical fiber is used for coupling; correspondingly, the more the temperature measurement channels, the more significant the beneficial effect of implementing the application. Specifically, the number of the temperature measurement channels may be 2, 3, 4, etc., or 12, 16, 18 or 24 temperature measurement channels can be set according to actual needs. That is, N is an integer greater than 1.

In both the first embodiment and the second embodiment, four temperature measurement channels are provided. As shown in FIG. 5 and FIG. 6, four temperature measurement channels are arranged side by side in the substrate, wherein the four temperature measurement channels 31 arranged side by side include a first temperature measurement channel 314, a second temperature measurement channel 315, a third temperature measurement channel 316 and a fourth temperature measurement channel 317.

The incident light path 311 in the first temperature measurement channel 314 has intersection points with the reflected light path 312 in the second temperature measurement channel 315, the reflected light path 312 in the third temperature measurement channel 316 and the reflected light path 312 in the fourth temperature measurement channel 317. The incident light path 311 in the second temperature measurement channel 315 has intersection points with the reflected light path 312 in the third temperature measurement channel 316 and the reflected light path 312 in the fourth temperature measurement channel 317. The incident light path 311 in the third temperature measurement channel 316 is provided with an intersection point with the reflected light path 312 in the fourth temperature measurement channel 317.

Therefore, in the first embodiment and the second embodiment, 6 intersection points are provided. If the optical fiber is used for docking, 12 optical fibers are needed, which makes the temperature measurement system very complex and inconvenient for subsequent maintenance.

It should be noted that the dotted lines in FIGs. 2, 4, 5, and 6 are also laser transmission routes. The laser transmission routes are indicated by the dashed lines, just to distinguish different components.

The above are only the preferred embodiments of the present application, and do not limit the scope of the present application. Any modification, equivalent replacement, improvement, etc. made within the spirit and principles of the present application shall be included in the scope of protection of the present application.

## Claims

1. A planar lightwave circuit device, comprising a substrate, wherein N temperature measurement channels are arranged in the substrate side by side; wherein N is an integer greater than 1;
each temperature measurement channel comprises an incident light path, a reflected light path and an outgoing light path; in the same temperature measurement channel, the incident light path, the reflected light path and the outgoing light path are connected through a common node; and
in the N temperature measurement channels arranged side by side, the incident light path of one temperature measurement channel is provided with an intersection point with the reflected light path of at least one other temperature measurement channel.

2. The planar lightwave circuit device as in claim 1, in the N temperature measurement channels arranged side by side, ends of N incident light paths away from the common node converge to form a first interface, and ends of N reflected light paths away from the common node converge to form a second interface, and ends of N outgoing light paths away from the common node converge to form a third interface.

3. The planar lightwave circuit device as in claim 2, the substrate is a sheet structure, an inclined platform with an inclination angle is arranged on one side of the substrate, and the second interface is arranged on the inclined platform.

4. The planar lightwave circuit device as in claim 1, an optical splitting unit is also arranged in the substrate;
the optical splitting unit comprises an optical splitting input optical path and N optical splitting output optical paths, an output end of the optical splitting input optical path is connected to input ends of the N optical splitting output optical paths respectively, and output ends of the N optical splitting output optical paths are connected to N incident optical paths one-by-one.

5. The planar lightwave circuit device as in claim 2, an optical splitting unit is also arranged in the substrate;
the optical splitting unit comprises an optical splitting input optical path and N optical splitting output optical paths, an output end of the optical splitting input optical path is connected to input ends of the N optical splitting output optical paths respectively, and output ends of the N optical splitting output optical paths are connected to N incident optical paths one-by-one.

6. The planar lightwave circuit device as in claim 3, an optical splitting unit is also arranged in the substrate;
the optical splitting unit comprises an optical splitting input optical path and N optical splitting output optical paths, an output end of the optical splitting input optical path is connected to input ends of the N optical splitting output optical paths respectively, and output ends of the N optical splitting output optical paths are connected to N incident optical paths one-by-one.

7. The planar lightwave circuit device as in claim 2, the planar lightwave circuit device further comprising:
a photoelectric detector, the photoelectric detector is vertically arranged on a side close to the second interface of the substrate, and the photoelectric detector is connected to the N reflected light paths through the second interface.

8. The planar lightwave circuit device as in claim 3, the planar lightwave circuit device further comprising:
a photoelectric detector, the photoelectric detector is vertically arranged on a side close to the second interface of the substrate, and the photoelectric detector is connected to the N reflected light paths through the second interface.

9. The planar lightwave circuit device as in claim 3, the inclination angle of the inclined platform is 40°~ 50°.

10. The planar lightwave circuit device as in claim 1, four temperature measurement channels are arranged side by side in the substrate, wherein the four temperature measurement channels arranged side by side include a first temperature measurement channel, a second temperature measurement channel, a third temperature measurement channel and a fourth temperature measurement channel;
the incident light path in the first temperature measurement channel is respectively provided with an intersection point with the reflected light path in the second temperature measurement channel, the reflected light path in the third temperature measurement channel and the reflected light path in the fourth temperature measurement channel;
the incident light path in the second temperature measurement channel is respectively provided with an intersection point with the reflected light path in the third temperature measurement channel and the reflected light path in the fourth temperature measurement channel; and
the incident light path in the third temperature measurement channel is provided with an intersection point with the reflected light path in the fourth temperature measurement channel.

11. A temperature measurement system, comprising a probe light source, a photoelectric detector, a planar lightwave circuit device and a measuring optical fiber;
the planar lightwave circuit device comprises a substrate, wherein N temperature measurement channels are arranged in the substrate side by side; wherein N is an integer greater than 1;
each temperature measurement channel comprises an incident light path, a reflected light path and an outgoing light path; in the same temperature measurement channel, the incident light path, the reflected light path and the outgoing light path are connected through a common node;
in the N temperature measurement channels arranged side by side, the incident light path of one temperature measurement channel is provided with an intersection point with the reflected light path of at least one other temperature measurement channel;
the probe light source is connected to ends of incident light paths away from the common node, the photoelectric detector is connected to ends of reflected light paths away from the common node, the measuring optical fiber is connected to ends of outgoing light paths away from the common node; and
the measuring optical fiber is provided with an FBG sensor.

12. The temperature measurement system as in claim 11, in the N temperature measurement channels arranged side by side, the ends of the N incident light paths away from the common node converge to form a first interface, and the ends of the N reflected light paths away from the common node converge to form a second interface, and the ends of the N outgoing light paths away from the common node converge to form a third interface;
the probe light source is connected to the N incident light paths through the first interface, the photoelectric detector is connected to the N reflected light paths through the second interface, the measuring optical fiber is connected to the N outgoing light paths through the third interface.

13. The temperature measurement system as in claim 12, the substrate is a sheet structure, an inclined platform with an inclination angle is arranged on one side of the substrate, and the second interface is arranged on the inclined platform;
the photoelectric detector is arranged on the outer side of the inclined platform, and the laser signals in the reflected light paths enter the photo electric detector after being reflected by the inclined platform.

14. The temperature measurement system as in claim 11, an optical splitting unit is also arranged in the substrate;
the optical splitting unit comprises an optical splitting input optical path and N optical splitting output optical paths, an output end of the optical splitting input optical path is connected to input ends of the N optical splitting output optical paths respectively, and output ends of the N optical splitting output optical paths are connected to N incident optical paths one-by-one;
the probe light source is connected to an input end of the optical splitting input optical path.

15. The temperature measurement system as in claim 12, an optical splitting unit is also arranged in the substrate;
the optical splitting unit comprises an optical splitting input optical path and N optical splitting output optical paths, an output end of the optical splitting input optical path is connected to input ends of the N optical splitting output optical paths respectively, and output ends of the N optical splitting output optical paths are connected to N incident optical paths one-by-one;
the probe light source is connected to an input end of the optical splitting input optical path.

16. The temperature measurement system as in claim 13, an optical splitting unit is also arranged in the substrate;
the optical splitting unit comprises an optical splitting input optical path and N optical splitting output optical paths, an output end of the optical splitting input optical path is connected to input ends of the N optical splitting output optical paths respectively, and output ends of the N optical splitting output optical paths are connected to N incident optical paths one-by-one;
the probe light source is connected to an input end of the optical splitting input optical path.

17. The temperature measurement system as in claim 12, the photoelectric detector is integrated and arranged in the planar lightwave circuit device, and the photoelectric detector is vertically arranged on a side close to the second interface of the substrate.

18. The temperature measurement system as in claim 13, the photoelectric detector is integrated and arranged in the planar lightwave circuit device, and the photoelectric detector is vertically arranged on a side close to the second interface of the substrate.

19. The temperature measurement system as in claim 13, the inclination angle of the inclined platform is 40°~ 50°.

20. The temperature measurement system as in claim 11, four temperature measurement channels are arranged side by side in the substrate, wherein four temperature measurement channels include a first temperature measurement channel, a second temperature measurement channel, a third temperature measurement channel and a fourth temperature measurement channel;
the incident light path in the first temperature measurement channel is respectively provided with an intersection point with the reflected light path in the second temperature measurement channel, the reflected light path in the third temperature measurement channel and the reflected light path in the fourth temperature measurement channel;
the incident light path in the second temperature measurement channel is respectively provided with an intersection point with the reflected light path in the third temperature measurement channel and the reflected light path in the fourth temperature measurement channel;
the incident light path in the third temperature measurement channel is provided with an intersection point with the reflected light path in the fourth temperature measurement channel.
